# EUROPEAN PATENT APPLICATION

(11) **EP 2 141 839 A1**
(43) Date of publication of application: **06.01.2010**
(21) Application number: 08305357.9
(22) Date of filing: 30.06.2008
(51) Int. Cl.: H04J 3/16

(54) **Method and device for borrowing time slot**

(71) Applicant: Thomson Licensing, Inc., 92100 Boulogne-Billancourt (FR)
(72) Inventor: Cheng, Linxiang, 100085, BEIJING (CN); Zhang, Zhigang, 100085, BEIJING (CN); Wang, Xianlei, 100085, BEIJING (CN)
(74) Representative: Ruellan-Lemonnier, Brigitte

(57) **Abstract**

The present invention provides a central control device, a communication unit and a method for borrowing time slot. The central control device for connecting with a plurality of communication units in a time division multiplexed network, comprising a processor for collecting time slot occupation information for at least one of the plurality of communication units; and a transmitter for broadcasting the collected slot occupation information to the plurality of communication units.

## Description

### FIELD OF THE INVENTION

The present invention relates in general to a method and device for borrowing time slot, and more particularly, to a central control device, a communication unit and method for borrowing time slot in a time division multiplexed network.

### BACKGROUND OF THE INVENTION

In a time division multiplexed network, data frames are transmitted between central control device and communication unit over time slots allocated by the central control device. Here the central control device can be an access point (AP), a switch or a router and so on, which connect with a plurality of communication units and transfer data with the communication units. The communication units can be a wireless station or a computer and so on, which can be used by a user to communicate in the network.

A kind of time slot allocation method is introduced in a Dynamic Synchronous Transfer Mode (DTM) system. The system includes a plurality of nodes, in case of non-uniform traffic, a node that requires high capacity may have to regularly borrow slots from and return slots to their respective home node, which results in overhead for slot negotiation and longer setup times for the channel.

US6504853 discloses a technique for allocating access to time slots used for transferring data between nodes in a time multiplexed network, wherein the nodes will broadcast their time slot usage and send borrowing request to other nodes. Using such technique, the broadcast message in the network will be sent frequently, so that numerous bandwidths will be occupied by such message. In addition, the method in this patent for borrowing and not returning slot, but requesting more slots and pushing them to delete fragment are not suitable to a limited bandwidth system, especially a cable network.

### SUMMARY OF THE INVENTION

According to one aspect of the invention, provide a central control device for connecting with a plurality of communication units in a time division multiplexed network, comprising: a processor for collecting time slot occupation information for at least one of the plurality of communication units; and a transmitter for broadcasting the collected slot occupation information to the plurality of communication units.

The invention also concerns a method used in a central control device for connecting with a plurality of communication unit in a time division multiplexed network, comprising: collecting slot occupation information for at least one of the plurality of communication units; and broadcasting the collected slot occupation information to the plurality of communication units.

The invention also concerns a communication unit for connecting with a central control device in a time division multiplexed network, comprising: a receiver for receiving a slot occupation information of a plurality of communication units in the time division multiplexed network from the central control device; a processor for selecting at least one communication units with idle slot from the plurality of communication units, according to the received slot occupation information; and a transmitter for sending a slot borrowing request message to the at least one communication units to borrow time slot.

The invention also concerns a method used in a communication unit for connecting with a central control device in a time division multiplexed network, comprising: receiving a slot occupation information of a plurality of communication units in the time division multiplexed network from the central control device; selecting at least one communication units with idle slot from the plurality of communication units, according to the received slot occupation information; and sending a slot borrowing request message to the at least one communication units to borrow time slot.

### BRIEF DESCRIPTION OF DRAWINGS

These and other aspects, features and advantages of the present invention will become apparent from the following description in connection with the accompanying drawings:
Fig.1 is a schematic diagram showing an Asymmetric Data over Coaxial Cable (ADoC) cable access network used to explain an embodiment of the invention;
Fig.2 is a schematic diagram showing a time slot occupation information in a beacon message according to the embodiment of the invention;
Fig.3 is a diagram showing a frame format for time slot borrowing request according to the embodiment of the invention;
Fig.4 is a flow chart showing the procedure of borrowing time slot from a station in accordance with the embodiment of the present invention;
Fig.5 is an exemplary configuration of an access point in accordance with the embodiment of the invention; and
Fig. 6 is an exemplary configuration of a communication unit in accordance with the embodiment of the invention.

### DETAIL DESCRIPTION OF PREFERRED EMBODIMENTS

A description will now be given with reference to the attached figures to illustrate advantages and features of the present invention, according to various illustrative embodiments of the present invention.

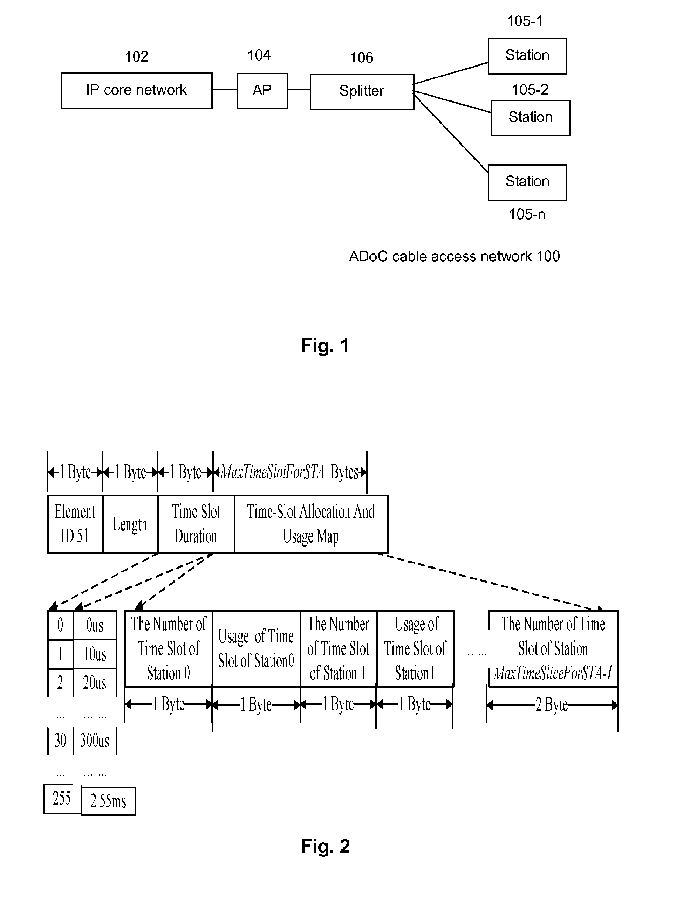

Fig.1 is a schematic diagram showing an Asymmetric Data over Coaxial (ADoC) Cable access network 100 used to explain an embodiment of the invention. As shown in Fig.1, an access point (AP) 104 as a central control device and a plurality of stations 105-1 to 105-n as the communication units are connected via splitter 106, and the AP 104 is connected with an IP core network 102 . Therefore, users at home can access to the remote IP core network 102 via a cable connection of the ADoC network as a time division multiplexed network by the stations.

Generally, after the stations have passed an authentication and association with the AP, the AP will allocate time slots to each station, and inform the usage information of the time slots. The usage information includes slot number, slot position, slot borrowing and lending capability, and level of borrowing and returning slots and so on.

The level of borrowing slots define the opportunity of borrowing slots, for example, the upper limit of data rate, the upper limit of high priority traffic, or the combination of both. The station can borrow slots from others only when date rate reaches the upper limit, and for high priority traffics, such as video and audio traffic, the upper limit may be lower than other traffics.

The level of returning slots define the opportunity of returning slots, for example, the lower limit of data rate, the lower limit of high priority traffic, or the combination of both. Similar to the level borrowing slots, the station shall return the borrowed slots when the date rate is lower than the lower limit, and for the high priority traffics, the lower limit will be lower than other traffics.

The slot borrowing and lending capability of a station defines the number of time slots that can be borrowed from and lent to other stations.

Repeatedly or periodically, the AP broadcasts the slot occupation information of at least one station in a beacon message defined in the ADoC network. Here the slot occupation information may be the number of the occupied time slot, the ratio of the occupied time slots to the allocated time slots, or the number of the idle time slot and so on, if only usage condition can be shown in the information.

Each station will pick up the slot occupation information for borrowing slots. Here, the AP may obtain the slot occupation information according to the data transmission rate of these stations. For example, if one time slot is mapped into 500kbps and a station is allocated two time slot (1Mbps), when the data transmission rate of the station is 500kbps, the occupation slots percent will be 50%. In addition, each station may report respective slot occupation information to the AP.

Fig.2 is a schematic diagram showing a time slot occupation information in a beacon message according to the embodiment of the invention. The detailed definition for each field in the time slot occupation information is as follows:
Element identity (ID): it is an ID of the information element for time slot occupation information;
Length: it is the length of the information element;
Time slot duration: it is the length of one time slot, and "0" in this field is defined as 0us time slot, "1" as 10us time slot and so on;
Time slot allocation and Usage Map: it includes the information of slot length and occupation for each of stations shown as the blow fields in detail.

The Time slot allocation and Usage Map includes the number of the time slot of station n which is allocated when connecting with the AP, and the usage of time slots of station n which is the time slots occupied by the station for data transmission currently. For example, the usage of time slot can be expressed by occupation rate. If the allocated time slot = 2 and Usage of Time slot = 50, it means 50% time slots is occupied. The usage of time slot can also be expressed by number of time slot, such as the usage of time slot = 1.

When one of the stations has a large amount of traffic over the defined borrowing levels, or when the data transmission rate does not reach the borrowing level, and at that time the station will make a higher priority data transmission, the station need to borrow time slot from other stations. Firstly the station search the slot occupation information of the others from the broadcasted beacon message, and find out whether there is idle slots for borrowing. If there are idle slots for borrowing, the station counts the amount of slots to be borrowed according to its borrowing capability, and sends a slot borrowing request message to the AP, which indicates to borrow time slots from at least one other stations. The borrowing slot request also indicates the amount of slots to be borrowed from each of the other stations.

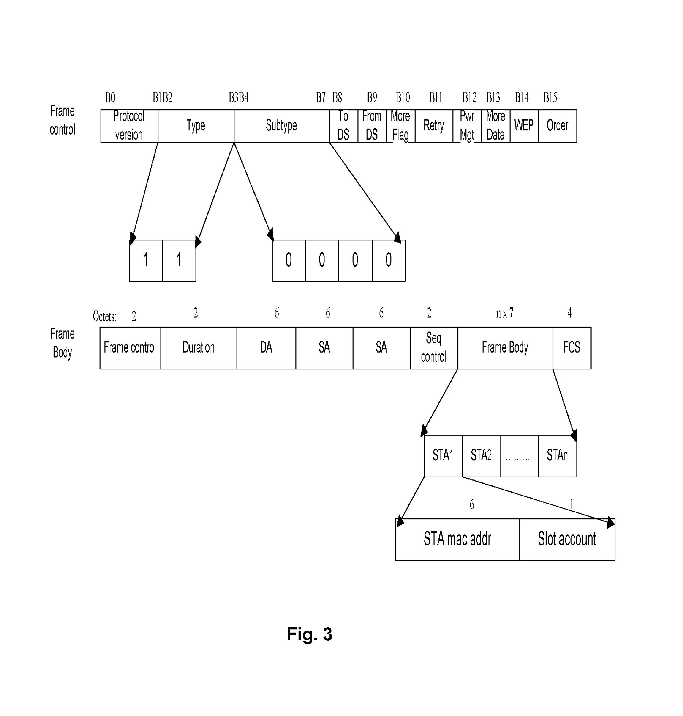

Fig.3 is a diagram showing a frame format for time slot borrowing request according to the embodiment of the invention. In the embodiment of the invention, a normal frame format of IEEE802.11. is used to make a slot borrowing request by a station. In the frame format as shown in Fig.3, a new management frame for borrowing slot is defined as "11" in a Type field, which is included in a frame control field as shown in the upper side of Fig.3 of the IEEE802.11 Media Access Control (MAC) frame as shown in the lower side of Fig.3. The Subtype field includes borrowing request expressed as "0000", borrowing response as "0001", calling back request as "0010" and calling back response as "0011".

In addition, in a Frame Body field of the lower side IEEE802.11 MAC frame, the corresponding MAC address as identifier of the stations and number of time slots are included.

For example, if a station STA2 in the broadcast time slot occupation information has 4 time slots allocated by the AP, and its borrowing capability is 2 time slots, that is the station can borrow at most 2 time slots from other stations. In addition, the station has a borrow level of 250bps, that is, only when the data transmission rate over the time slots of the station reaches 250bps, the station can borrow at most 2 time slots from other stations. Then, for example the frame format in Fig.3 will include "11" in Type field, "0000" in Subtype field, and each of the MAC address of the stations that the STA2 intend to borrow time slot from and the number of time slots to be borrowed from each other stations in Frame Body field.

Preferably, the borrowing station STA2 shall select the most convenient stations as the borrowed station to reduce fragment or more borrowing actions. For example, if there are idle time slots in STA1 or STA3 which are adjacent to STA2, the STA2 shall borrow time slots from them firstly . In addition, if the required time slots to be borrowed can be found from one station, it is prefer to select the one station as the borrowed station. That is, the station STA2 may select the number of the borrowed stations so as to reduce fragment. In addition, the borrowing station may define priority for each borrowed station according to its selection requirement, and send the priority with the borrowing request. For example, the STA2 selects to borrow slot from STA1, STA3, STA4, and STA1 is the most expected station, STA4 is the second expected station, and STA3 is the third expected station. These selected stations can put into the Frame Body in order, so that the AP can recognize their priority.

After the AP receives the slot borrowing request message, the AP will forward this borrowing request to those stations in the frame body. Then, when receiving the request, the requested stations will check the present traffic and find out the slot which can be borrowed, then send the borrowing response to AP. the borrowing response frame will include "11" in Type field, "0001" in Subtype field, and MAC address of the borrowed station, start time and time slot number in the Frame Body.

The AP receives the borrowing responses from the stations, and selects the most convenient slot for the borrowing station and forward the response to the borrowing station. Here, the selecting principle is the same as the selection of STA2, so as to reduce fragment or slot amount, and so on.

Then, the borrowing station STA2 receives the response, get the slot information and adjust its own slot to exchange data with the AP.

On the other hand, when the borrowed station needs to call back the slots, it may send a time slot calling back request to AP. The fame body of the calling back request includes MAC address of the borrowed station and slot count that the borrowed station wants to call back. The AP will check the information list and find out the corresponding borrowing stations, and forward this request to them. In this case, the borrowing station must release the borrowing slots at once by a calling back response message. The fame body of the calling back response includes MAC address of the borrowed station, the slot start time and the slot count. So the request for the borrowed station has the highest priority for returning the borrowing slot.

In addition, when the borrowing station has traffic rate below the defined returning levels, it must return the borrowing slots to AP by the same message as the calling back response message, and the AP forwards the message to the borrowed stations.

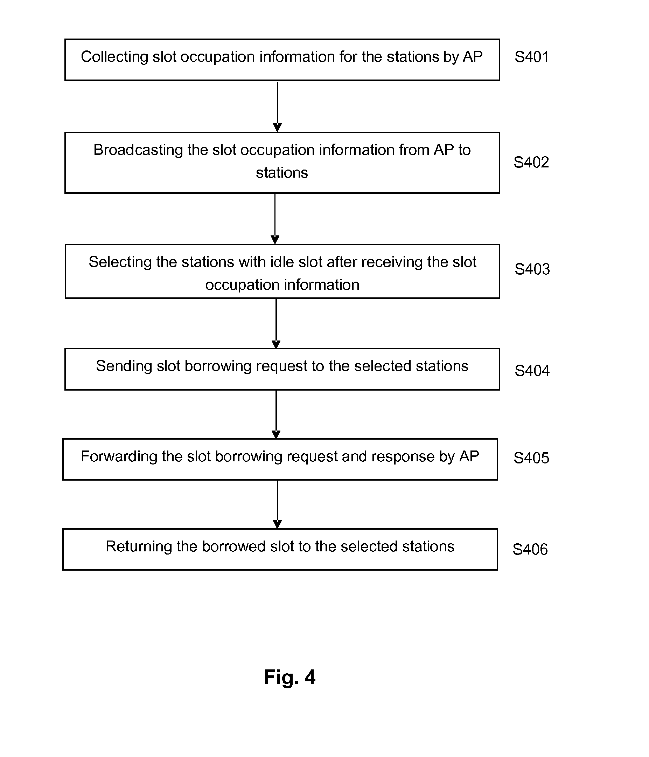

Fig.4 is a flow chart showing the procedure of borrowing time slot from a station in accordance with the embodiment of the present invention. At step S401, the AP collects time slot occupation information for at least one station. It is preferable that the AP may maintain a list for the information, and update the list periodically. Then at step S402, the AP broadcasts the time slot occupation information to all stations repeatedly or periodically using an information construction in the beacon message as shown in Fig.2. After receiving the beacon message with the information, the station meeting its borrowing level can select other stations with idle slot at step S403. Then the station sends a slot borrowing request message with a frame format as shown in Fig.3 to the selected stations at step S404. Then at step S405 the AP will receive the slot borrowing request message from the station and forward it to the selected stations, and if the selected stations can lend their idle slot to the station according to their condition, a slot borrowing response message will be sent to the borrowing station, while the AP can forward it to the borrowing station.

The borrowing station and the borrowed stations need to adjust their time slot for data transmission after the slot borrowing response message is sent and received. Then, when the borrowed stations need more time slot, or the borrowing station has a traffic amount below a returning level, the borrowing station shall return the borrowed time slot at step S406.

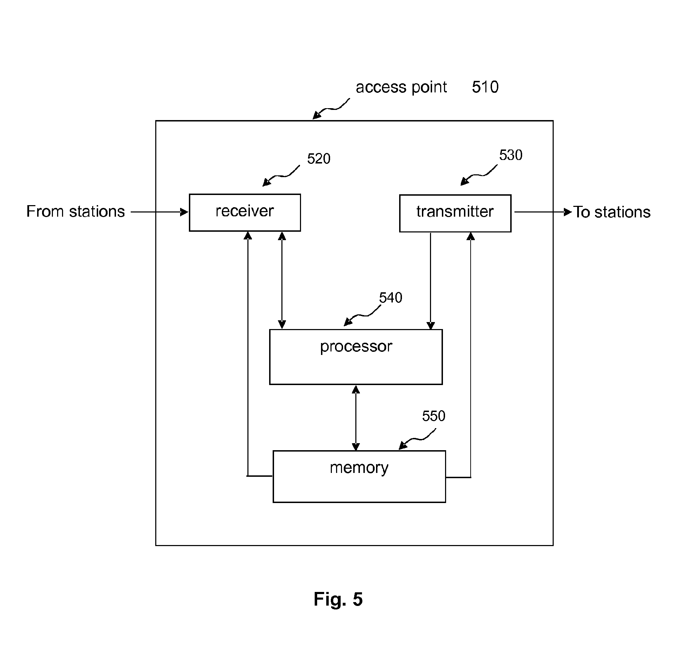

Fig. 5 is an exemplary configuration of an access point 510 in accordance with the embodiment of the invention. The AP 510 connects with a plurality of stations, and comprises a processor 540 for controlling data transmission among the stations, and a receiver 520 and a transmitter 530 for receiving and transmitting data from/to the stations. The AP 510 also includes a memory 550 for storing the buffered data, the above-mentioned slot occupation information list, and executable instructions and data for programming the processor 540 according to the present invention. It will be appreciated that the receiver 520, the transmitter 530, the processor 540, and the memory 550 can be combined in whole or in part and fabricated as an integrated circuit.

As mentioned above, when the stations connect with the AP 510, the AP allocates time slot, borrowing level and capability and so on for them. According to the embodiment of the invention, the AP510 collects and broadcasts the time slot occupation information to the stations, and forward the borrowing request and response message to the stations.

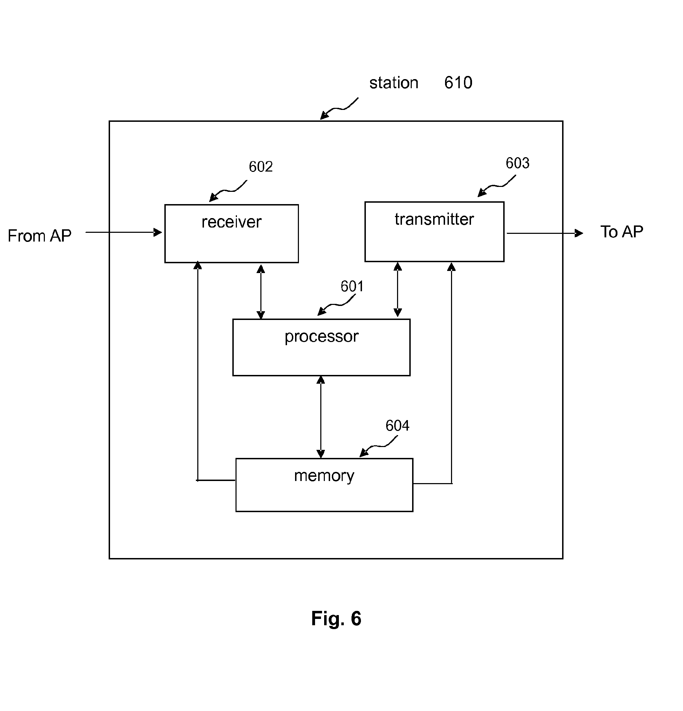

Fig. 6 is an exemplary configuration of a station in accordance with the embodiment of the invention. The station 610 connects with the AP 510, and comprises a processor 601 for controlling a receiver 602 and a transmitter 603 coupled to the processor 601 for communicating with the AP 610. In addition, the station 610 includes a memory 604 coupled to the processor 601, which stores buffered data, and executable instructions and data for programming the processor 601 in accordance with the present invention. It will be appreciated that the processor 601, the receiver 602, the transmitter 603, and the memory 604 can be combined in whole or in part and fabricated as an integrated circuit.

As mentioned above, the station 610 controls the receiver 602 and transmitter 603 so as to borrow, lend and return time slot with the aid of AP 510 according to the embodiment of the present invention.

Although the embodiment of the invention are described based on an ADoC system with a time multiplexed network, the man skilled in the art may adapt the invention to other environments with a time multiplexed network.

While figures 5 and 6 represent a possible block diagram for implementing the described embodiment, other implementations may be made. In particular, the different items of figures 5 and 6 may be implemented in hardware or software, or a combination of hardware and software, and the different functional blocks of figures 5 and 6 may be combined or split as required by a specific application.

The foregoing merely illustrates the embodiments of the invention and it will thus be appreciated that those skilled in the art will be able to devise numerous alternative arrangements which, although not explicitly described herein, embody the principles of the invention and are within its spirit and scope.

## Claims

1. A central control device for connecting with a plurality of communication units in a time division multiplexed network, comprising:
a processor for collecting time slot occupation information for at least one of the plurality of communication units; and
a transmitter for broadcasting the collected slot occupation information to the plurality of communication units.

2. The central control device according to claim 1, wherein the time slot occupation information is obtained according to respective data transmission rate of the at least one communication unit.

3. The central control device according to claim 1 or 2, further comprising a receiver for receiving, from a first communication unit of the plurality of communication units, a slot borrowing request message which indicates to borrow time slot from at least one second communication units of the plurality of communication units based on the broadcasted slot occupation information.

4. The central control device according to claim 3, wherein the processor is adapted to forward the received slot borrowing request to the indicated at least one second communication units via the transmitter.

5. The central control device according to claim 4, wherein the processor is adapted to receive a slot borrowing response from the at least one second communication units via the receiver and forward the slot borrowing response to the first communication unit via the transmitter.

6. The method used in a central control device according to any one of the preceding claims.

7. A communication unit for connecting with a central control device in a time division multiplexed network, comprising:
a receiver for receiving a slot occupation information of a plurality of communication units in the time division multiplexed network from the central control device;
a processor for selecting at least one communication unit with idle slot from the plurality of communication units, according to the received slot occupation information; and
a transmitter for sending a slot borrowing request message to the at least one communication unit to borrow time slot.

8. The communication unit according to claim 7, wherein the processor is adapted to select the at least one communication unit which has at least one idle time slot adjacent to time slots of the communication unit.

9. The communication unit according to claim 7 or 8, wherein the processor is adapted to select the number of the at least one communication unit so as to reduce fragment.

10. The communication unit according to any one of claims 7-9, wherein the receiver is adapted to receive from the at least one communication units a borrowing response message in response to the borrowing request message, and the processor is adapted to adjust the time slots of the communication unit to include the borrowed slots.

11. The communication unit according to claim 10, wherein when receiving a calling back message from one of the at least one communication units via the receiver, the processor is adapted to release the borrowed slots from the one communication unit.

12. The method used in a communication unit according to any one of the preceding claims 7-11.
